(19)

Europäisches
Patentamt
European
Patent Office
Office européen
des brevets

(11)  **EP 3 806 032 A1**

(12)  **EUROPEAN PATENT APPLICATION**
published in accordance with Art. 153(4) EPC

(43) Date of publication:
**14.04.2021 Bulletin 2021/15**

(21) Application number: **19833720.6**

(22) Date of filing: **08.07.2019**

(51) Int Cl.:
***G06T 7/00*** *(2017.01)*

(86) International application number:
**PCT/JP2019/026924**

(87) International publication number:
**WO 2020/013105 (16.01.2020 Gazette 2020/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.07.2018 JP 2018133532**

(71) Applicants:
• **KABUSHIKI KAISHA KOBE SEIKO SHO (KOBE STEEL, LTD.)**
**Hyogo 651-8585 (JP)**

• **KOBELCO CONSTRUCTION MACHINERY CO., LTD.**
**Hiroshima-shi**
**Hiroshima 731-5161 (JP)**

(72) Inventor: **OZAKI, Keita**
**Hyogo 651-2271 (JP)**

(74) Representative: **TBK**
**Bavariaring 4-6**
**80336 München (DE)**

(54)  **OBJECT DETECTION DEVICE AND OBJECT DETECTION METHOD FOR CONSTRUCION MACHINE**

(57)     An object detection device (1) includes: a correction unit (41) that corrects, by using projective transformation, distortion of an image (Im) captured by a camera (2) capturing an image of a detection target object and mounted on a construction machine (100); and a processing unit (42) that sets, in the image (Im) after correction, a plurality of regions (R-1, R-2, and R-3) provided in accordance with a distance between the camera (2) and the object and each having a different area, and performs image processing of detecting the object with respect to a part of the image (Im) corresponding to each of the plurality of regions (R-1, R-2, and R-3).

FIG.2

EP 3 806 032 A1

**Description**

**Technical Field**

The present invention relates to a technique for detecting an object on the basis of an image captured by a camera.

**Background Art**

A technique of detecting an object by performing image processing on an image captured by a camera is known. For example, the object detection device disclosed in Patent Literature 1 includes a parameter setting means which includes a scan range changing means for changing a scan range in one frame of an input video in accordance with a distance class according to a distance between a camera and an object to be detected, a detection window size changing means for changing a detection window size in accordance with the distance class, and a detection window movement amount changing means for changing a detection window movement amount in accordance with the distance class, a resizing processing unit for inputting an input video taken with the camera and resizing the input video in a scan range set according to the distance class by the scan range changing means, a search setting unit which sets searching of a resizing image processed by the resizing processing unit with the detection window size set according to the distance class by the detection window size changing means and the detection window movement amount set according to the distance class by the detection window movement amount changing means, and a multiple-size raster scan processing unit which scans, at least one stage at each class of the distance class, and searches the resizing image based on the scan range by the detection window size and the detection window movement amount set according to the distance class by the search setting part, and registers an area of the detection window at a position where the object to be detected is present, for detecting the object to be detected.

In order to ensure the safety of the person working around the construction machine, it is conceivable to mount an object detection device described above on the construction machine. In the case of construction machines, it is further required to improve the accuracy and speed of object detection because of human safety concern.

**Citation List**

**Patent Literature**

Patent Literature 1: JP 2017-156988 A

**Summary of Invention**

An object of the present invention is to provide an object detection device and an object detection method for a construction machine, which can improve accuracy and speed of object detection.

An object detection device for a construction machine according to one aspect of the present invention includes: a correction unit that corrects, by using projective transformation, distortion of an image captured by a camera capturing an image of a detection target object and mounted on a construction machine; and a processing unit that sets, in the image after correction, a plurality of regions provided in accordance with a distance between the camera and the object and each having a different area, and performs image processing of detecting the object with respect to a part of the image corresponding to each of the plurality of regions.

**Brief Description of Drawings**

FIG. 1 is a schematic view showing an example of a construction machine on which an object detection device according to an embodiment is mounted.
FIG. 2 is a block diagram showing a configuration of the object detection device according to an embodiment.
FIG. 3 is a schematic view showing an image Im-1, which is an example of an image Im captured by a camera.
FIG. 4 is a schematic view showing the image Im-1 after correction.
FIG. 5 is an image view showing an image Im-2, which is another example of the image Im captured by the camera.
FIG. 6 is an image view showing the image Im-2 after correction.
FIG. 7 is an image view showing an image Im-3 after correction, regarding the image Im-3 in which a person is appearing in the center.

FIG. 8 is a schematic view showing a first region to be set in an image after correction.

FIG. 9 is a schematic view showing a second region to be set in an image after correction.

FIG. 10 is a schematic view showing a third region to be set in an image after correction.

FIG. 11 is a flowchart illustrating an operation of the object detection device according to an embodiment.

FIG. 12 is an explanatory diagram illustrating an example of an HOG feature amount extracted from the image Im-1 before correction.

FIG. 13 is an explanatory diagram illustrating an example of the HOG feature amount extracted from the image Im-1 after correction.

FIG. 14 is a schematic view showing an image Im-4, which is yet another example of the image Im captured by the camera.

FIG. 15 is a schematic view showing the image Im-4 after correction.

**Description of Embodiment**

An embodiment of the present invention will be described below in detail with reference to the drawings. In each of the drawings, it is indicated that components denoted by identical reference numerals are the identical components, and the description of the components having already been described is omitted. In this description, a generic term is indicated by a reference numeral without a suffix (e.g., person 10), and an individual component is indicated by a reference numeral with a suffix (e.g., person 10-1).

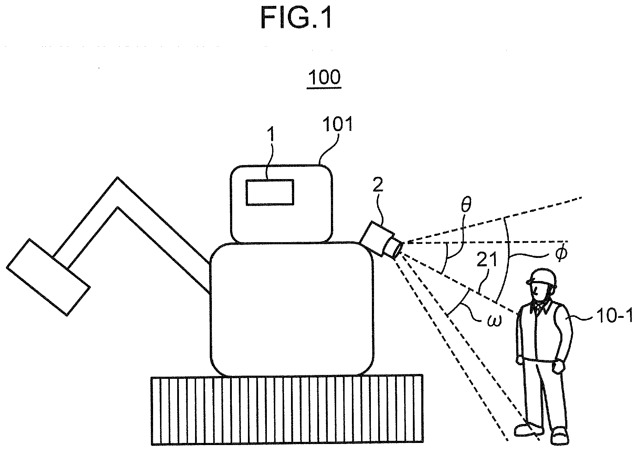

FIG. 1 is a schematic view showing an example of a construction machine 100 on which an object detection device 1 according to an embodiment is mounted. The object detection device 1 is a device that performs image processing on an image Im (moving image) captured by a camera 2 capturing a detection target object, and that detects the object appearing in the image Im. Description will be given of an example of a person 10 as an object.

The construction machine 100 includes a cabin 101 in which an operator operates the construction machine 100. The object detection device 1 is arranged in the cabin 101. The camera 2 is mounted on a predetermined position of the construction machine 100, and a capturing range is set in a range where the detection target person 10 (e.g., a person 10-1) appears. The camera 2 sends a captured image Im to the object detection device 1.

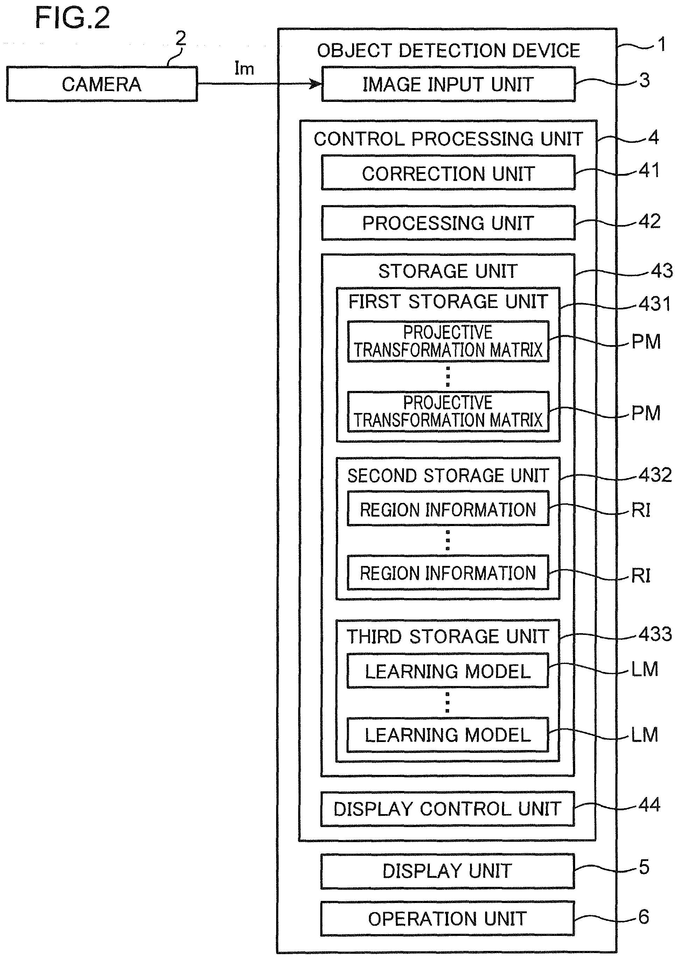

FIG. 2 is a block diagram showing a configuration of the object detection device 1 according to an embodiment. The object detection device 1 includes an image input unit 3, a control processing unit 4, a display unit 5, and an operation unit 6.

The image input unit 3 inputs the image Im (moving image) captured by the camera 2. The image input unit 3 is implemented by an input interface (input interface circuit).

The control processing unit 4 is a hardware processor that performs various controls and various processing of the object detection device 1, and includes, as functional blocks, a correction unit 41, a processing unit 42, a storage unit 43, and a display control unit 44. The control processing unit 4 is implemented by hardware such as a central processing unit (CPU), a graphics processing unit (GPU), a random access memory (RAM), a read only memory (ROM), and a hard disk drive (HDD), and programs and data for executing the functions of the functional blocks described above.

The correction unit 41 corrects distortion of the image Im having been input to the image input unit 3. The reason that the distortion of the image Im is corrected will be described. Referring to FIG. 1, since the construction machine 100 is relatively large, the mounting position of the camera 2 is usually above the height of the person 10 (e.g., the person 10-1). Since the vicinity of the construction machine 100 is dangerous, an optical axis 21 of the camera 2 is set obliquely downward (in other words, the optical axis 21 is set at an angle overlooking the person 10) so that the person 10 (e.g., the person 10-1) near the construction machine 100 can be detected. In order to widen the detection range (capturing range), a lens of the camera 2 is a wide-angle lens. Due to the above, the image Im captured by the camera 2 is relatively largely distorted.

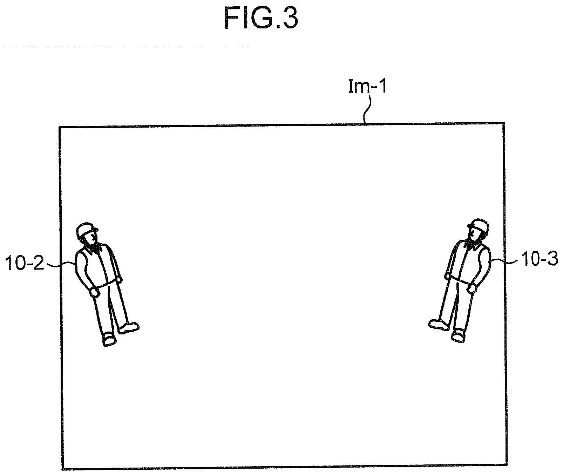

FIG. 3 is a schematic view showing the image Im-1, which is an example of the image Im captured by the camera 2. The image Im-1 is distorted into a reverse trapezoid (inverted trapezoid). Due to this, a person 10-2 appearing on the left side in the image Im-1 is inclined to the left, and a person 10-3 appearing on the right side in the image Im-1 is inclined to the right, which is different from the normal appearance of the person 10, thereby causing a decrease in accuracy of person detection.

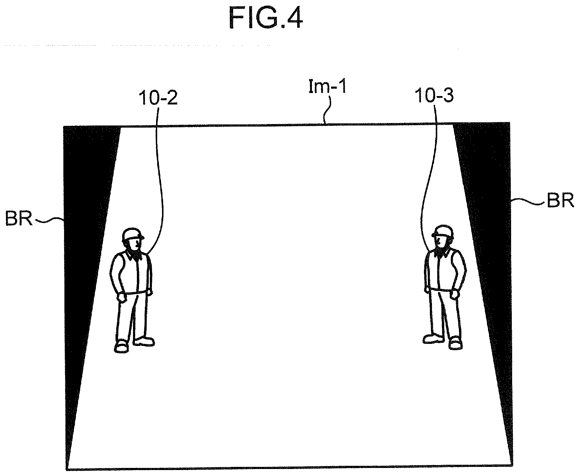

The correction unit 41 performs projective transformation on the image Im-1 to reduce the horizontal length of the image Im-1 from the lower side toward the upper side of the image Im-1 in the vertical direction, thereby correcting the shape of the image Im-1 into a trapezoid. FIG. 4 is a schematic view showing the image Im-1 after correction. The area of the image Im-1 after correction is smaller than that before correction. Black regions BR present on both sides of the image Im-1 after correction indicate parts of the image Im-1 before correction that have been lost by the correction. The value obtained by adding the area of the image Im-1 after correction and the area of the black regions BR is the area of the image Im-1 before correction. The vertical direction of the image Im before and after correction is the vertical direction of the image Im at the time of capturing, and the horizontal direction of the image Im before and after correction is the horizontal direction of the image Im at the time of capturing.

Since the distortion of the image Im-1 is reduced or eliminated by the correction, the amount by which the person 10-2 appearing on the left side in the image Im-1 is inclined to the left and the amount by which the person 10-3 appearing on the right side in the image Im-1 is inclined to the right can be reduced or eliminated.

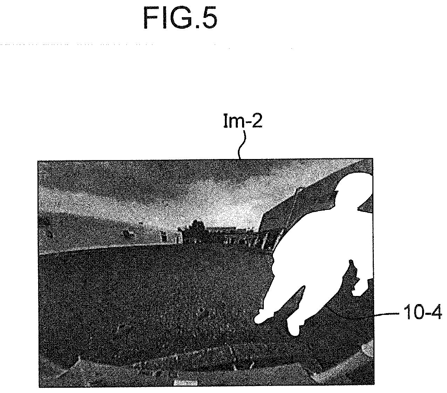

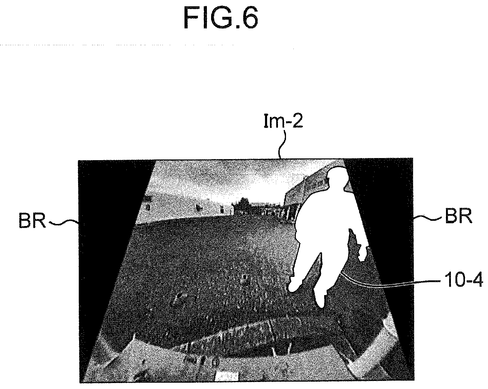

The correction of the distortion of the image Im will be described with reference to the image views. FIG. 5 is an image view showing the image Im-2, which is another example of the image Im captured by the camera 2. A person 10-4 is appearing on the right side in the image Im-2. The image Im-2 is distorted into a reverse trapezoid. Thus, the person 10-4 is inclined to the right. FIG. 6 is an image view showing the image Im-2 after correction. Since the distortion of the image Im-2 is reduced by the correction, the amount by which the person 10-4 appearing on the right side in the image Im-2 is inclined to the right can be reduced.

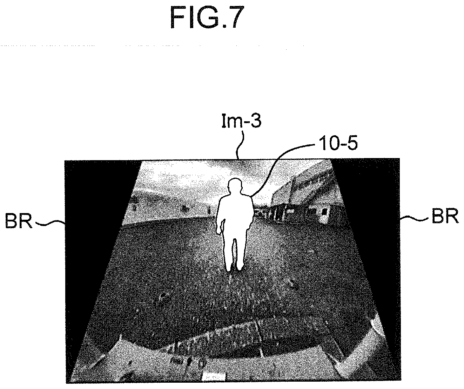

In the center of the image Im-2, the inclination amount of the image Im-2 is smaller than that of the left and right sides. FIG. 7 is an image view showing an image Im-3 after correction, regarding the image Im-3 in which a person 10-5 is appearing in the center. The inclination of the person 10-5 is almost eliminated.

Referring to FIG. 2, the processing unit 42 sets a region in the image Im after correction (a regions may be referred to as a search region or an interest region), and performs image processing of detecting the person 10 in a part, of the image Im after correction, corresponding to the region.

The image Im after correction (e.g., the image Im-1 shown in FIG. 4) becomes small in the horizontal length from the lower side toward the upper side of the image Im in comparison with the image Im before correction (e.g., the image Im-1 shown in FIG. 3). Therefore, in the horizontal direction of the image Im, the range for person detection of the image Im after correction becomes narrower than that of the image Im before correction. Hence, when a region is set in the image Im after correction to perform person detection, the horizontal length of the region can be reduced as compared with the case where a region is set in the image Im before correction to detect a person. As a result, when a region is set in the image Im after correction to perform person detection, the area of the region can be reduced as compared with the case where a region is set in the image Im before correction to detect a person, and hence it is possible to reduce the amount of image processing of person detection. Since the processing unit 42 can set a region in the image Im after correction to perform person detection and can reduce the amount of the image processing, the speed of person detection can be improved.

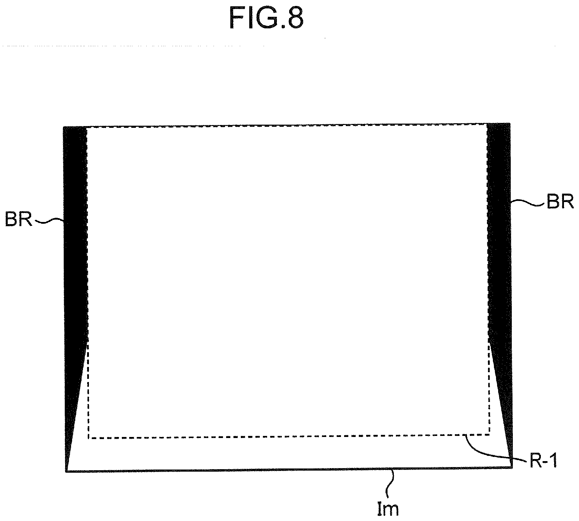

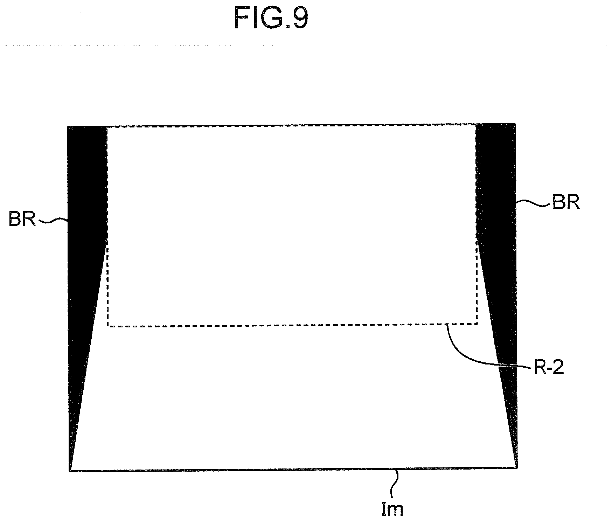

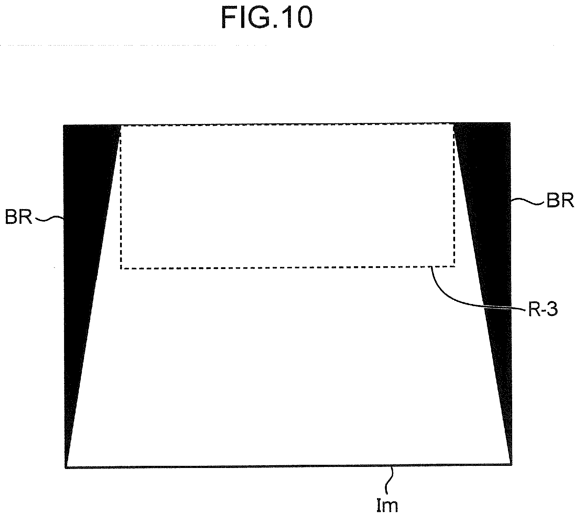

The processing unit 42 executes the image processing described above for each of a plurality of regions R provided in accordance with the distance between the camera 2 and the object. Not a single region but a plurality of regions are provided in accordance with the distance between the camera 2 and the person 10. Description will be given of three regions R (regions R-1, R-2, and R-3) as an example in the embodiment. FIG. 8 is a schematic view showing the first region R-1 set in the image Im after correction. FIG. 9 is a schematic view showing the second region R-2 set in the image Im after correction. FIG. 10 is a schematic view showing the third region R-3 set in the image Im after correction.

The region R-1 is used to detect the person 10 whose distance from the camera 2 is a short distance (e.g., distance of 3 meters or less from the camera 2). The region R-2 is used to detect the person 10 whose distance from the camera 2 is a medium distance (e.g., distance of 3 to 6 meters from the camera 2). The region R-3 is used to detect the person 10 whose distance from the camera 2 is a long distance (e.g., distance of 6 to 10 meters from the camera 2).

The area of the region R is varied according to the distance between the camera 2 and the person 10 (object). The reason is as follows. The longer the distance between the camera 2 and the person 10 is, the smaller the area of a part where the person 10 may appear in the image Im becomes. For example, in the detection of the person 10 walking outdoors, the longer the distance between the camera 2 and the person 10 is, the larger the area of a part where the ground appears and the area of a part where the sky appears become, and the smaller the area of a part where the person 10 may appear becomes.

Therefore, the distance between the camera 2 and the person 10 is classified into a short distance, a medium distance, and a long distance, and set to the area of the region R where the following relation is established. This can reduce the amount of image processing of person detection, and hence it is possible to improve the speed of person detection.

Area of Region R (Region R-1) for Short Distance > Area of Region R (Region R-2) for Medium Distance > Area of Region R (Region R-3) for Long Distance

The regions R-1, R-2, and R-3 have a horizontal length smaller than the horizontal length of the image Im before correction. The range in which the person 10 whose distance from the camera 2 is a short distance appears in the image Im after correction is almost the entire image Im after correction. The region R-1 for a short distance is set to almost the entire image Im after correction. Since the construction machine 100 appears in the lower part of the image Im after correction, the region R-1 for a short distance is not set in this part.

The region R-2 for a medium distance is set in a part from slightly below the center of the image Im after correction to the upper end of the image Im. This is because the person 10 whose distance from the camera 2 is a medium distance appears in this part. The region R-3 for a long distance is set to a part above the center of the image Im after correction. This is because the person 10 whose distance from the camera 2 is a long distance appears in this part.

Due to the above, the processing unit 42 can reduce the amount of image processing compared with the case of performing the image processing of person detection on the entire image Im after correction.

The processing unit 42 sets the region R-3, with both ends of the region R-3 for a long distance being within the image Im after correction in the horizontal direction of the image Im after correction, and sets the regions R-1 and R-2, with both ends of the region R-1 for a short distance and both ends of the region R-2 for a medium distance being out of the both ends of the image Im after correction in the horizontal direction of the image Im after correction. That is, the processing unit 42 sets the region R, of the plurality of regions R, used for person detection at a distance larger than a predetermined value within the image Im after correction, and sets the region R, of the plurality of regions R, used for person detection at a distance equal to or smaller than the value out of the image Im after correction.

The region R is a quadrangle, and the image Im after correction is a trapezoid. For this reason, when the region R is set in the image Im after correction, it is impossible to align both ends of the region R with both ends of the image Im after correction in the horizontal direction of the image Im after correction. When both ends of the region R are out of both ends of the image Im after correction in the horizontal direction of the image Im after correction, it is unnecessary for the processing unit 42 to perform image processing of person detection on the part out of the region R.

On the other hand, when both ends of the region R are within the image Im after correction (both ends of the region R are not out of both ends of the image Im after correction) in the horizontal direction of the image Im after correction, the unnecessary image processing described above can be eliminated. This can reduce the amount of image processing. However, at both ends of the image Im after correction, there are parts where image processing of person detection is not performed. This decreases the accuracy of the person detection.

The vicinity of the construction machine 100 is dangerous. Therefore, in the embodiment, the accuracy of person detection is given priority when the distance between the camera 2 and the person 10 is a short distance or a medium distance (in the case of person detection at a distance equal to or smaller than a predetermined value), and elimination of unnecessary image processing is given priority when the distance is a long distance (in the case of person detection at a distance larger than the predetermined value).

It is to be noted that an example in which both ends of the region R cannot be aligned with both ends of the image Im after correction due to the relationship between the shape of the region R and the image Im after correction is not limited to the case in which the shape of the region R is a quadrangle and the shape of the image Im after correction is a trapezoid. For example, it also occurs in the case where the shape of the region R is a rectangle and the shape of the image Im after correction is a parallelogram.

Referring to FIG. 2, the storage unit 43 includes a first storage unit 431, a second storage unit 432, and a third storage unit 433. The first storage unit 431 stores in advance a projective transformation matrix PM. The projective transformation matrix PM is a matrix used for projective transformation for correcting distortion of the image Im. The calculation method of the projective transformation matrix PM will be described later.

The second storage unit 432 stores in advance region information RI indicating conditions under which the plurality of regions R is set in the image Im after correction. The conditions for the plurality of regions R are the number of the regions R, setting positions (coordinates on the image Im after correction) of the regions R, and the like. While FIGS. 8 to 10 describe an example with the three regions R, the number of the regions R may be two or four or more.

The third storage unit 433 stores in advance a learning model LM subjected to machine learning. The processing unit 42 executes the prediction/recognition phase of the machine learning by using the learning model LM, thereby detecting the person 10 appearing in the image Im after correction. The learning model LM includes a learning model constructed with an image of a person in an upright state as training data, a learning model constructed with an image of a person in a half-sitting state as training data, and a learning model constructed with an image of a person in a squatting state as training data. The learning model LM is used for detecting the person 10 in each of an upright state, a half-sitting state, and a squatting state. At a construction site, the person 10 is mainly in any of an upright state, a half-sitting state, and a squatting state. For example, only with the learning model for detecting the person 10 in an upright state, the detection accuracy of the person 10 in a half-sitting state or a squatting state decreases. In the embodiment, the accuracy of person detection is improved by including the learning model LM for detecting the person 10 in each of an upright state, a half-sitting state, and a squatting state.

Referring to FIGS. 1 and 2, the projective transformation matrix PM, the region information RI, and the learning model LM are each determined in accordance with the combination of the height of the position of the camera 2 and the angle of the optical axis 21 of the camera 2 (inclination angle θ of the camera 2). There are various types of the construction machine 100, and the shape and size of the construction machine 100 are different depending on the type. For this reason, the combination of the height of the position of the camera 2 and the angle of the optical axis 21 are different depending on the type of the construction machine 100. For example, there are a type in which the combination of the height of the camera 2 of 1 meter and the angle of the optical axis 21 of 15 degrees is applied, a type in which the combination of the height of the camera 2 of 2 meters and the angle of the optical axis 21 of 20 degrees is applied, and a type in which the combination of the height of the camera 2 of 3 meters and the angle of the optical axis 21 of 40 degrees is applied.

If the projective transformation matrix PM, the region information RI, and the learning model LM are determined in accordance with the combination, the accuracy of person detection is improved. Therefore, the first storage unit 431 stores in advance a plurality of combinations and a plurality of projective transformation matrices PM in association with each other regarding the projective transformation matrix PM calculated in accordance with the combination of the height of the position of the camera 2 and the angle of the optical axis 21 of the camera 2. The second storage unit 432 stores in advance a plurality of combinations and a plurality of pieces of region information RI in association with each other regarding the region information RI determined in accordance with the combination of the height of the position of the camera 2 and the angle of the optical axis 21 of the camera 2. The third storage unit 433 stores in advance a plurality of combinations and a plurality of learning models LM in association with each other regarding the learning model LM constructed in accordance with the combination of the height of the position of the camera 2 and the angle of the optical axis 21 of the camera 2. Therefore, the object detection device 1 according to the embodiment can be applied to various types of the construction machine 100.

Using the operation unit 6, the person who sets the projective transformation matrix PM, the region information RI, and the learning model LM inputs, to the control processing unit 4, the height of the position of the camera 2 and the angle of the optical axis 21 of the camera 2 mounted on the construction machine 100. The correction unit 41 selects the projective transformation matrix PM associated with the combination of the input height and angle from the plurality of projective transformation matrices PM stored in the first storage unit 431, and executes correction of the inclination of the image Im. The processing unit 42 selects the region information RI associated with the combination of the input height and angle from the plurality of pieces of region information RI stored in the second storage unit 432, and executes the image processing of person detection on the image Im after correction. The processing unit 42 selects the learning model LM associated with the combination of the input and angle from the plurality of learning models LM stored in the third storage unit 433, and executes the machine learning.

The display control unit 44 causes the display unit 5 to display various images, various pieces of information, and the like. For example, the display control unit 44 causes the display unit 5 to display in real time the image Im (moving image) captured by the camera 2 during the operation of the construction machine 100, and causes the display unit 5 to display an alarm when the processing unit 42 detects the person 10. As for the alarm, for example, when the processing unit 42 detects the person 10, the display control unit 44 causes the display unit 5 to display the image Im to which a frame surrounding the person 10 is added. The color of the frame may be changed in accordance with the distance between the camera 2 and the person 10. For example, the display control unit 44 sets the color of the frame surrounding the person 10 to red when the person 10 present at a short distance is detected, sets the color of the frame surrounding the person 10 to yellow when the person 10 present at a medium distance is detected, and sets the color of the frame surrounding the person 10 to green when the person 10 present at a long distance is detected.

The display unit 5 is implemented by a liquid crystal display, an organic light emitting diode display, or the like.

The operation unit 6 is a device with which the user of the object detection device 1 (operator of the construction machine 100) inputs the operation of the object detection device 1, and the person who sets the projective transformation matrix PM and the like inputs information (height of the position of the camera 2 and the angle of the optical axis 21) necessary for the setting. The operation unit 6 is implemented by a touch screen, a hardware key, or the like.

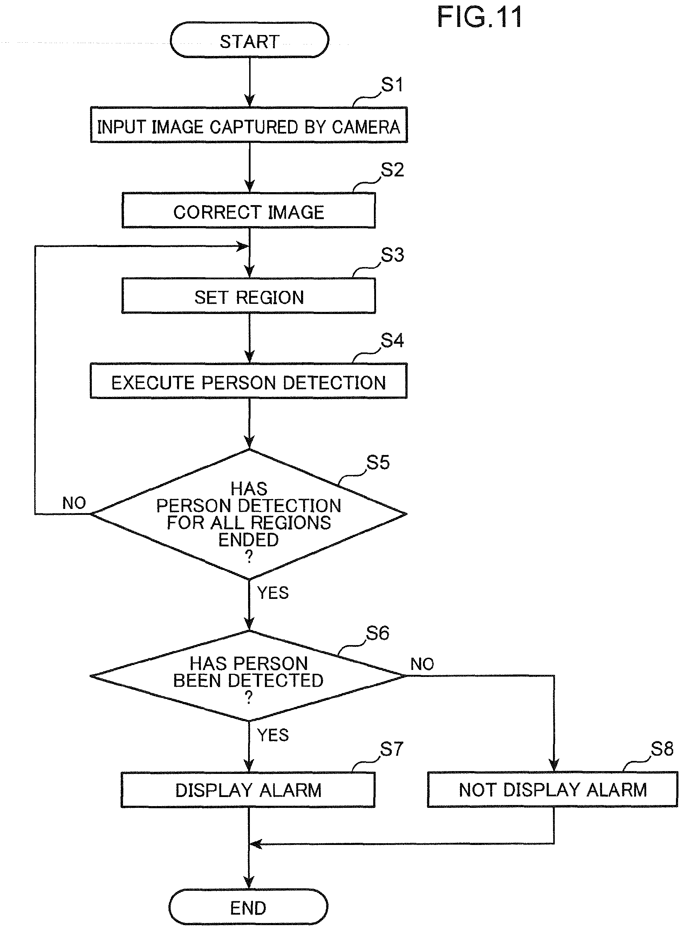

The operation of the object detection device 1 according to the embodiment will be described. FIG. 11 is a flowchart illustrating this operation. Referring to FIGS. 2 and 11, the correction unit 41 selects in advance the projective transformation matrix PM, and the processing unit 42 selects in advance the region information RI and the learning model LM. The camera 2 captures the image Im (moving image) during the operation of the construction machine 100, and sends the captured image Im to the image input unit 3 in real time. The image input unit 3 inputs the image Im captured by the camera 2 (step S1) and sends the image Im to the control processing unit 4.

The correction unit 41 performs projective transformation by using the selected projective transformation matrix PM on the image Im sent to the control processing unit 4, thereby correcting distortion (inclination) of the image (step S2). Thus, for example, the image Im-1 shown in FIG. 4 is obtained.

The processing unit 42 sets the region R in the image Im after correction (step S3). Here, of the three regions R shown in FIGS. 8 to 10, the region R-1 for a short distance is set.

The processing unit 42 performs the person detection by executing the recognition phase of the machine learning on the part corresponding to the region R-1 of the image Im in which the region R-1 for a short distance is set (step S4). More specifically, the processing unit 42 performs image processing of extracting the feature amount of the person 10 on the part corresponding to the region R-1. Here, the feature amount is a histogram of oriented gradients (HOG) feature amount. The processing unit 42 discriminates whether or not the person 10 exists in the region R-1 on the basis of the extracted HOG feature amount. For this discrimination, for example, a support vector machine (SVM) and a Cascade-AdaBoost classifier can be used.

The technique of person detection is not limited to machine learning, and may be pattern matching or optical flow, for example.

When the processing unit 42 discriminates the presence of the person 10 in the region R-1, it is determined that the person 10 has been detected from the region R-1. When the processing unit 42 discriminates the absence of the person 10 in the region R-1, it is determined that the person 10 has not been detected from the region R-1.

The learning model LM selected by the processing unit 42 includes a learning model constructed with an image of a person in an upright state as training data, a learning model constructed with an image of a person in a half-sitting state as training data, and a learning model constructed with an image of a person in a squatting state as training data. Using each of these learning models, the processing unit 42 performs the processing of person detection (step S4).

The processing unit 42 determines whether or not the processing of person detection (step S4) has ended for all of the three regions R-1, R-2, and R-3 (step S5). When the processing unit 42 determines that the processing of person detection has not ended for all of the three regions R-1, R-2, and R-3 (No in step S5), the processing unit 42 sets the region R for the image Im after correction (step S3). Here, out of the three regions R-1, R-2, and R-3, the region R-2 for a medium distance is set.

The processing unit 42 performs person detection for the region R-2 for a medium distance by using a method similar to that in the case of the region R-1 for a short distance (step S4).

The processing unit 42 determines whether or not the processing of person detection (step S4) has ended for all of the three regions R-1, R-2, and R-3 (step S5). When the processing unit 42 determines that the processing of person detection has not ended for all of the three regions R-1, R-2, and R-3 (No in step S5), the processing unit 42 sets the region R for the image Im after correction (step S3). Here, out of the three regions R-1, R-2, and R-3, the region R-3 for a long distance is set.

The processing unit 42 performs person detection for the region R-3 for a long distance by using a method similar to that in the case of the region R-1 for a short distance (step S4).

The processing unit 42 determines that the processing of person detection has ended for all of the three regions R-1, R-2, and R-3 (Yes in step S5). When the processing unit 42 detects, in step S4, the person 10 (Yes in step S6), the display control unit 44 causes the display unit 5 to display an alarm (step S7). When the processing unit 42 does not detect, in step S4, the person 10 (No in step S6), the display control unit 44 does not cause the display unit 5 to display an alarm (step S8).

The object detection device 1 executes the processing of steps S2 to S8 at predetermined time intervals (sampling period). It is to be noted that the processing unit 42 may lengthen the time interval when the distance between the camera 2 and the person 10 is long, and may shorten the time interval when the distance is short. For example, the processing unit 42 sets the time interval of the person detection using the region R-1 for a short distance to be shorter than the time interval of the person detection using the region R-2 for a medium distance and the region R-3 for a long distance.

If the time interval of person detection is long, the amount of image processing of person detection (series of processing amounts from step S2 to step S5) can be reduced, but the accuracy of person detection decreases. On the other hand, if the time interval of person detection is short, the amount of image processing of person detection is increased, but the accuracy of person detection is improved. The vicinity of the construction machine 100 is dangerous. Therefore, the accuracy of person detection is given priority when the distance between the camera 2 and the person 10 is short, and reduction of the amount of image processing of person detection is given priority when the distance is long.

According to the embodiment, distortion of the image Im is corrected by performing projective transformation on the image Im captured by the camera 2 (step S2), and person detection is performed by performing machine learning based on the HOG feature amount on the image Im after correction (step S4). This can improve the accuracy of person detection. This will be explained in detail.

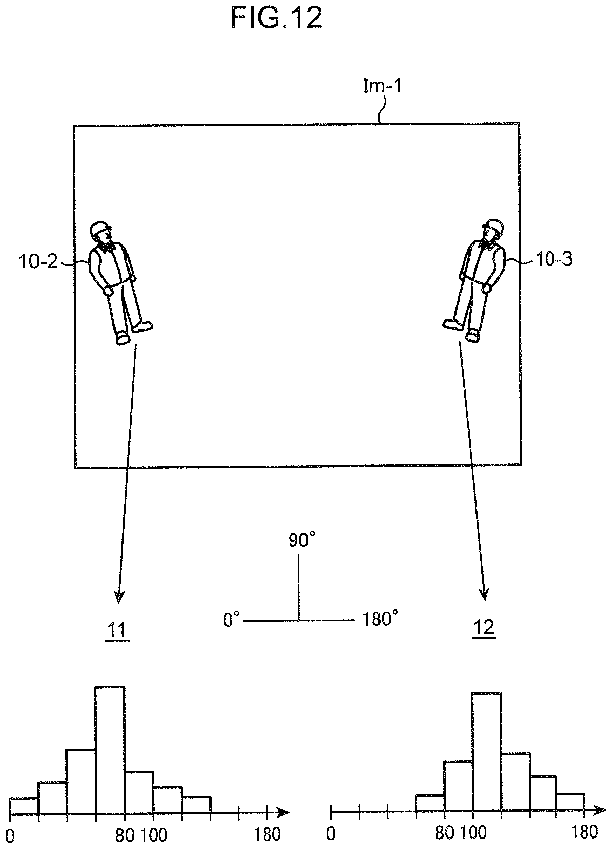

FIG. 12 is an explanatory diagram illustrating an example of an HOG feature amount extracted from the image Im-1 before correction. The image Im-1 before correction is the image Im-1 shown in FIG. 3. An HOG feature amount 11 is one of the HOG feature amounts of the person 10-2 appearing at the left end of the image Im-1. The person 10-2 is inclined to the left, and the inclination angle is 70 degrees. Hence, the histogram has a large component in the 70 degree direction.

An HOG feature amount 12 is one of the HOG feature amounts of the person 10-3 appearing at the right end of the image Im-1. The person 10-3 is inclined to the right, and the inclination angle is 110 degrees. Hence, the histogram has a large component in the 110 degree direction. The postures of the persons 10-2 and 10-3 are not normal. Normally, the histogram has a large component in the 90 degree direction. Therefore, when the processing unit 42 discriminates a person by using the HOG feature amount extracted from the image Im-1 before correction, the accuracy of the person detection decreases.

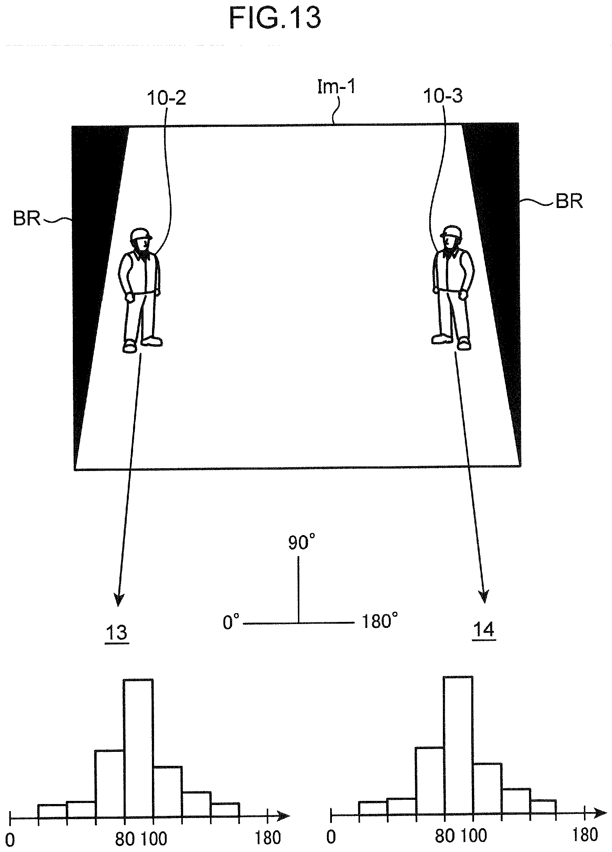

FIG. 13 is an explanatory diagram illustrating an example of the HOG feature amount extracted from the image Im-1 after correction. The image Im-1 after correction is the image Im-1 shown in FIG. 4. An HOG feature amount 13 is one of the HOG feature amounts of the person 10-2 appearing at the left end of the image Im-1. An HOG feature amount 14 is one of the HOG feature amounts of the person 10-3 appearing at the right end of the image Im-1. Since the distortion (inclination) of the persons 10-2 and 10-3 has been corrected, the histogram has a large component in the 90 degree direction. According to the embodiment, since the processing unit 42 discriminates a person by using the HOG feature amount extracted from the image Im-1 after correction, it is possible to improve the accuracy of person detection.

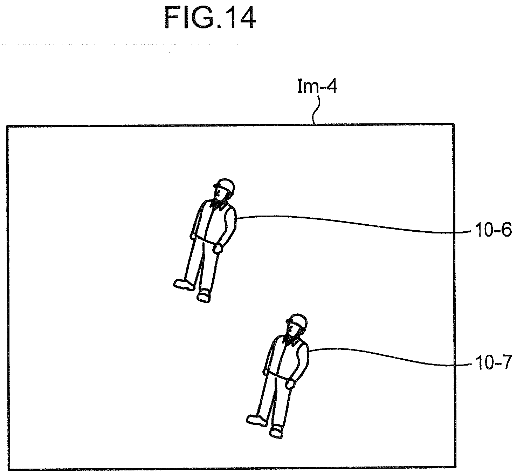

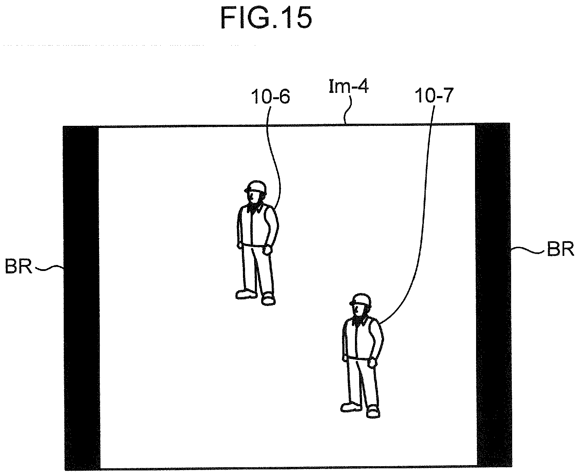

Referring to FIGS. 1 and 3, the entire image Im-1 is distorted into an inverted trapezoid, whereby the object (person 10-2) on the left side in the image Im-1 is inclined to the left and the object (person 10-3) on the right side is inclined to the right. When the position of the camera 2 becomes high and the angle of the optical axis 21 becomes large, both of the inclination of the person 10-2 to the left and the inclination of the person 10-3 to the right become large. When the position of the camera 2 becomes low and the angle of the optical axis 21 becomes small, both of the inclination of the person 10-2 to the left and the inclination of the person 10-3 to the right become small. This is an example of distortion of the image Im. The distortion of the image Im is different depending on the position and height of the camera 2 mounted on the construction machine 100 and the angle of the optical axis 21. FIG. 14 is a schematic view showing an image Im-4, which is yet another example of the image Im captured by the camera 2. The entire image Im-4 is inclined to the right. Therefore, persons 10-6 and 10-7 appearing in the image Im-4 are inclined to the right. In such a case, the correction unit 41 corrects the entire image Im-4 by using projective transformation so as to eliminate the rightward inclination. FIG. 15 is a schematic view showing the image Im-4 after correction. The image Im-4 after correction is a quadrangle and has an area smaller than that of the image Im-4 before correction. The inclination of the persons 10-6 and 10-7 has been corrected.

The calculation method of the projective transformation matrix PM will be described. Referring to FIGS. 1,3, and 4, the distortion amount of the object appearing at the left end or right end of a range (capturing range) indicated by an angle of view $2\phi$ of the camera 2 is obtained. Here, the person 10-2 appearing at the left end of the range indicated by the angle of view $2\phi$ of the camera 2 is taken as an example. The distortion amount depends on the inclination angle $\theta$ of the camera 2, a height h of the camera 2, the number of pixels (xwidth, xheight) of the camera 2, and the angle of view $2\phi$ of the camera 2. The inclination angle $\theta$ (angle of the optical axis 21) of the camera 2 is an angle formed by the optical axis 21 of the camera 2 attached to the construction machine 100 and the horizontal axis. The height h of the camera 2 is a distance of the camera 2 attached to the construction machine 100 from the ground.

For the person 10-2 standing upright at a distance z from the camera 2, a distance z1 (projection distance) between the person 10-2 and the projection plane of the camera 2 is expressed by the equation (1). In the equation (1), $\omega$ is an angle defined by the person 10-2 and the optical axis 21 of the camera 2 with respect to the projection plane of the camera 2, and is expressed by the equation (2).

[Formula 1]

$$z1 = \frac{z \cos \omega}{\cos(\omega - \theta)} \qquad (1)$$

$$\omega = \theta + \arctan\left(\frac{h(y) - h}{z}\right) \qquad (2)$$

Here, h(y) is the height (stature) of the person 10-2. In calculation of the distortion amount, the height of the foot of the person 10-2 is 0 (h(y) = 0), and hence the distortion amount does not depend on the height of the person 10-2.

In the projection distance z1, a visual field width w of the projection plane of the camera 2 is expressed by the equation (3). Due to this, a pixel coordinate Xleft bottom of the foot of the person 10-2, which appears at the left end of the range indicated by the angle of view $2\phi$ of the camera 2, is expressed by the equation (4).

[Formula 2]

$$w = 2z1 \tan \phi \qquad (3)$$

$$X_{left\_bottom} = \frac{Xwidth}{2} - \frac{Xwidth}{w} \times z \tan \phi \qquad (4)$$

The pixel coordinate Xleft_bottom corresponds to the distortion amount of the person 10-2 standing upright. This can give the projective transformation matrix PM by using the equation (5).

[Formula 3]

$$u = \frac{a \times x + b \times y + c}{g \times x + h \times y + 1} \,,\; v = \frac{d \times x + e \times y + f}{g \times x + h \times y + 1} \qquad (5)$$

Here, x and y are X, Y coordinates before the projective transformation, and u and v are X, Y coordinates after the projective transformation. Also, a, b, c, d, e, f, g, and h are projective transformation coefficients constituting the projective transformation matrix PM. The projective transformation coefficient is calculated by solving simultaneous equations for the four corresponding point coordinates before and after the projective transformation shown in the following table.

[Table 1]

| BEFORE TRANSFORMATION | AFTER TRANSFORMATION |
|---|---|
| (1,480) | (1, 480) |
| (720, 480) | (720, 480) |
| (1, 1) | ( $X_{left\_bottom}$, 1) |
| (720, 1) | ( $X_{width}$ $X_{left\_bottom}$, 1) |

Although in the embodiment, the description has been given of person detection as an example, the present invention can also be applied to detection of an object (e.g., another construction machine and a safety fence) present at a civil engineering construction site other than a person.

(Summary of embodiment)

An object detection device for a construction machine according to one aspect of an embodiment includes: a correction unit that corrects, by using projective transformation, distortion of an image captured by a camera capturing an image of a detection target object and mounted on a construction machine; and a processing unit that sets, in the image after correction, a plurality of regions provided in accordance with a distance between the camera and the object and each having a different area, and performs image processing of detecting the object with respect to a part of the image corresponding to each of the plurality of regions.

Description will be given of an example in which the detection target is a person. Since the construction machine is relatively large, the mounting position of the camera is usually above the height of the person. Since the vicinity of the construction machine is dangerous, the optical axis of the camera is set obliquely downward so that a person near the construction machine can be detected. For these reasons, the image captured by the camera has a relatively large distortion (e.g., the image is inclined relatively large). When person detection is performed in this state, the accuracy of the person detection decreases. Therefore, the correction unit corrects distortion of the image by using the projective transformation. This can improve the accuracy of person detection (object detection).

The processing unit does not perform image processing of person detection on an entire image but set a region in the image and performs image processing of person detection on a part of the image corresponding to the region (part overlapping the region).

The area of the region is varied according to the distance between the camera and the person. The reason is as follows. The longer the distance between the camera and the person is, the smaller the area of a part where the person may appear in the image becomes. For example, in the detection of a person walking outdoors, the longer the distance between the camera and the person is, the larger the area of a part where the ground appears and the area of a part where the sky appears become, and the smaller the area of a part where the person may appear becomes. Therefore, in accordance with the distance between the camera and the person, the processing unit selectively uses the plurality of regions prepared in accordance with the distance between the camera and the person. This can reduce the amount of image processing of person detection (object detection), and hence it is possible to improve the speed of person detection (object detection).

In the configuration described above, the correction unit corrects distortion of the image by performing the projective transformation on the image to reduce a horizontal length of the image from a lower side toward an upper side of the image in a vertical direction, and makes a shape of the image a trapezoid.

This configuration is applied when the image captured by the camera is distorted into a reverse trapezoid (inverted trapezoid). In an image distorted into a reverse trapezoid, an object appearing on the left side in the image is inclined to the left, and an object appearing on the right side in the image is inclined to the right, which is different from a normal appearance of the object, thereby causing a decrease in accuracy of object detection.

Then, the correction unit performs projective transformation on the image to reduce the horizontal length of the image from the lower side toward the upper side of the image in the vertical direction, thereby correcting the shape of the image into a trapezoid. Since this eliminates the distortion, it is possible to prevent the object appearing on the left side in the image from being inclined to the left and the person appearing on the right side in the image from being inclined to the right.

In the configuration described above, the plurality of regions are quadrangular in shape, and the processing unit sets the region, of the plurality of regions, used for object detection at the distance larger than a predetermined value, with both ends of the region being within the image after correction in a horizontal direction of the image after correction, and sets the region, of the plurality of regions, used for object detection at the distance equal to or smaller than the value, with both ends of the region being out of the image after correction in a horizontal direction of the image after correction.

The region is a quadrangle, and the image after correction is a trapezoid. For this reason, when the region is set in the image after correction, it is impossible to align both ends of the region with both ends of the image after correction in the horizontal direction of the image after correction.

When both ends of the region are out of both ends of the image after correction in the horizontal direction of the image after correction, it is unnecessary for the processing unit to perform image processing of object detection on the part out of the region.

On the other hand, when both ends of the region are within the image after correction (both ends of the region are not out of both ends of the image after correction) in the horizontal direction of the image after correction, the unnecessary image processing described above can be eliminated. This can reduce the amount of image processing. However, at both ends of the image after correction, there are parts where image processing of object detection is not performed. This decreases the accuracy of the object detection.

The vicinity of the construction machine is dangerous. Therefore, in this configuration, the accuracy of object detection is given priority when the distance between the camera and the object is short (in the case of object detection at a distance equal to or smaller than a predetermined value), and elimination of unnecessary image processing is given priority when the distance is long (in the case of object detection at a distance larger than the predetermined value).

In the configuration described above, the processing unit sets, within the image after correction, the region, of the plurality of regions, used for object detection at the distance larger than a predetermined value, and sets, out of the image after correction, the region, of the plurality of regions, used for object detection at the distance equal to or smaller than the value.

An example in which both ends of the region cannot be aligned with both ends of the image after correction due to the relationship between the shape of the region and the image after correction is not limited to the case in which the shape of the region is a quadrangle and the shape of the image after correction is a trapezoid. For example, it also occurs in the case where the shape of the region is a rectangle and the shape of the image after correction is a parallelogram.

In this configuration, the accuracy of object detection is given priority when the distance between the camera and the object is short (in the case of object detection at a distance equal to or smaller than a predetermined value), and elimination of unnecessary image processing is given priority when the distance is long (in the case of object detection at a distance larger than the predetermined value).

In the configuration described above, the object detection device further includes a first storage unit that stores in advance a plurality of combinations of a height of a position of the camera and an angle of an optical axis of the camera and a plurality of the projective transformation matrices in association with each other regarding the projective transformation matrix used for the projective transformation, calculated in accordance with a combination of a height of a position of the camera and an angle of an optical axis of the camera, in which the correction unit selects the projective transformation matrix associated with a combination of a height of a position of the camera mounted on the construction machine and an angle of an optical axis of the camera, and executes the correction.

There are various types of the construction machine, and the shape and size of the construction machine are different depending on the type. For this reason, the combination of the height of the position and the angle of the optical axis of the camera are different depending on the type of the construction machine. If the projective transformation matrix is calculated in accordance with this combination, the accuracy of object detection is improved. According to this configuration, since a plurality of combinations of a height of a position and an angle of an optical axis of a camera and a plurality of projective transformation matrices are stored in association with each other regarding the projective transformation matrix calculated in accordance with the combination of the height of the position and the angle of the optical axis of the camera, the object detection device can be applied to various types of the construction machine.

In the configuration described above, the object detection device further includes a second storage unit that stores in advance a plurality of combinations of a height of a position of the camera and an angle of an optical axis of the camera and a plurality of pieces of region information in association with each other regarding the region information indicating conditions under which the plurality of regions are set in the image, determined in accordance with a combination of a height of a position of the camera and an angle of an optical axis of the camera, in which the processing unit selects the region information associated with a combination of a height of a position of the camera mounted on the construction machine and an angle of an optical axis of the camera, and executes the image processing.

As described above, the combination of the height of the position and the angle of the optical axis of the camera are different depending on the type of the construction machine. The conditions for the plurality of regions (the number of regions, the setting position of the region, the area of the region, and the like) are different in accordance with the combination. Therefore, if the region information indicating the conditions for the plurality of regions is determined in accordance with the combination, the accuracy of object detection is improved. According to this configuration, since a plurality of combinations of a height of a position and an angle of an optical axis of a camera and a plurality of pieces of region information are stored in association with each other regarding region information determined in accordance with the combination of the height of the position and the angle of the optical axis of the camera, the object detection device can be applied to various types of the construction machine.

In the configuration described above, the processing unit lengthens a time interval of object detection using each of the plurality of regions when the distance is long, and shortens the time interval when the distance is short.

If the time interval (sampling period) of object detection is long, the amount of image processing of object detection can be reduced, but the accuracy of object detection decreases. On the other hand, if the time interval of object detection is short, the amount of image processing of object detection is increased, but the accuracy of object detection is improved.

The vicinity of the construction machine is dangerous. Therefore, in this configuration, the accuracy of object detection is given priority when the distance between the camera and the object is short, and reduction of the amount of image processing of object detection is given priority when the distance is long.

In the above configuration, the object detection device further includes a third storage unit that stores in advance a learning model subjected to machine learning for detecting a person in each of an upright state, a half-sitting state, and a squatting state, in which the processing unit detects a person, which is the object appearing in the image after correction, by using the learning model (execution of a prediction/recognition phase of the machine learning using the learning model as the image processing).

In this configuration, the detection target object is a person, and the person appearing in an image after correction is detected by the machine learning (e.g., person detection using an HOG feature amount). At a construction site, a person is mainly in any of an upright state, a half-sitting state, and a squatting state. For example, only with a learning model for detecting a person in an upright state, the detection accuracy of the person in a half-sitting state or a squatting state decreases. This configuration improves the accuracy of person detection by including a learning model for detecting a person in each of an upright state, a half-sitting state, and a squatting state.

In the configuration described above, the third storage unit stores in advance a plurality of combinations of a height of a position of the camera and an angle of an optical axis of the camera and a plurality of the learning models in association with each other regarding the learning model constructed in accordance with a combination of a height of a position of the camera and an angle of an optical axis of the camera, and the processing unit selects the learning model associated with a combination of a height of a position of the camera mounted on the construction machine and an angle of an optical axis of the camera, and executes the machine learning.

As described above, the combination of the height of the position and the angle of the optical axis of the camera are different depending on the type of the construction machine. If a learning model is constructed in accordance with the combination, the accuracy of person detection is improved. According to this configuration, since a plurality of combinations of a height of a position and an angle of an optical axis of a camera and a plurality of learning models are stored in association with each other regarding a learning model constructed in accordance with the combination of the height of the position and the angle of the optical axis of the camera, the object detection device can be applied to various types of the construction machine.

An object detection method for a construction machine according to another aspect of the embodiment includes: a correction step of correcting, by using projective transformation, distortion of an image captured by a camera capturing an image of a detection target object and mounted on a construction machine; and a processing step of setting, in the image after correction, a plurality of regions provided in accordance with a distance between the camera and the object and each having a different area, and performing image processing of detecting the object with respect to a part of the image corresponding to each of the plurality of regions.

The object detection method according to another aspect of the embodiment defines the object detection device according to one aspect of the embodiment from the point of view of the method, and has the similar operations and effects to those of the object detection device according to one aspect of the embodiment.

**Claims**

1. An object detection device for a construction machine comprising:

   a correction unit that corrects, by using projective transformation, distortion of an image captured by a camera capturing an image of a detection target object and mounted on a construction machine; and
   a processing unit that sets, in the image after correction, a plurality of regions provided in accordance with a distance between the camera and the object and each having a different area, and performs image processing of detecting the object with respect to a part of the image corresponding to each of the plurality of regions.

2. The object detection device for a construction machine according to claim 1, wherein the correction unit corrects distortion of the image by performing the projective transformation on the image to reduce a horizontal length of the image from a lower side toward an upper side of the image in a vertical direction, and makes a shape of the image a trapezoid.

3. The object detection device for a construction machine according to claim 2, wherein
   the plurality of regions are quadrangular in shape, and
   the processing unit sets the region, of the plurality of regions, used for object detection at the distance larger than a predetermined value, with both ends of the region being within the image after correction in a horizontal direction of the image after correction, and sets the region, of the plurality of regions, used for object detection at the distance equal to or smaller than the value, with both ends of the region being out of the image after correction in the horizontal direction of the image after correction.

4. The object detection device for a construction machine according to claim 1, wherein the processing unit sets, within the image after correction, the region, of the plurality of regions, used for object detection at the distance larger than a predetermined value, and sets, out of the image after correction, the region, of the plurality of regions, used for object detection at the distance equal to or smaller than the value.

5. The object detection device for a construction machine according to claim 1, further comprising a first storage unit that stores in advance a plurality of combinations of a height of a position of the camera and an angle of an optical axis of the camera and a plurality of projective transformation matrices in association with each other regarding the projective transformation matrix used for the projective transformation, calculated in accordance with a combination of a height of a position of the camera and an angle of an optical axis of the camera,
   wherein the correction unit selects the projective transformation matrix associated with a combination of a height of a position of the camera mounted on the construction machine and an angle of an optical axis of the camera, and executes the correction.

6. The object detection device for a construction machine according to claim 1, further comprising a second storage unit that stores in advance a plurality of combinations of a height of a position of the camera and an angle of an optical axis of the camera and a plurality of pieces of region information in association with each other regarding the region information indicating conditions under which the plurality of regions are set in the image, determined in accordance with a combination of a height of a position of the camera and an angle of an optical axis of the camera,
   wherein the processing unit selects the region information associated with a combination of a height of a position of the camera mounted on the construction machine and an angle of an optical axis of the camera, and executes the image processing.

7. The object detection device for a construction machine according to claim 1, wherein the processing unit lengthens a time interval of object detection using each of the plurality of regions when the distance is long, and shortens the time interval when the distance is short.

8. The object detection device for a construction machine according to claim 1, further comprising a third storage unit that stores in advance a learning model subjected to machine learning for detecting a person in each of an upright state, a half-sitting state, and a squatting state,
   wherein the processing unit detects a person, which is the object appearing in the image after correction, by using the learning model.

9. The object detection device for a construction machine according to claim 8, wherein
   the third storage unit stores in advance a plurality of combinations of a height of a position of the camera and an angle of an optical axis of the camera and a plurality of the learning models in association with each other regarding the learning model constructed in accordance with a combination of a height of a position of the camera and an angle of an optical axis of the camera, and

the processing unit selects the learning model associated with a combination of a height of a position of the camera mounted on the construction machine and an angle of an optical axis of the camera, and executes the machine learning.

10. The object detection device for a construction machine according to claim 8 or 9, wherein the machine learning detects the person by using an HOG feature amount.

11. An object detection method for a construction machine comprising:

a correction step of correcting, by using projective transformation, distortion of an image captured by a camera capturing an image of a detection target object and mounted on a construction machine; and

a processing step of setting, in the image after correction, a plurality of regions provided in accordance with a distance between the camera and the object and each having a different area, and performing image processing of detecting the object with respect to a part of the image corresponding to each of the plurality of regions.

# FIG.1

100

## FIG.2

```
                                    ┌──────────────────────────────────────┐
                                    │  OBJECT DETECTION DEVICE        ─── 1 │
      ┌─────────────────┐    Im     │  ┌────────────────────────────────┐   │
 2 ── │     CAMERA      │ ────────► │  │      IMAGE INPUT UNIT      ─── 3│   │
      └─────────────────┘           │  └────────────────────────────────┘   │
                                    │  ┌────────────────────────────────┐   │
                                    │  │  CONTROL PROCESSING UNIT  ─── 4│   │
                                    │  │  ┌──────────────────────────┐  │   │
                                    │  │  │  CORRECTION UNIT    ── 41 │  │   │
                                    │  │  └──────────────────────────┘  │   │
                                    │  │  ┌──────────────────────────┐  │   │
                                    │  │  │  PROCESSING UNIT    ── 42 │  │   │
```

# FIG.3

# FIG.4

# FIG.5

Im-2

10-4

# FIG.6

Im-2

BR

BR

10-4

# FIG.7

# FIG.8

# FIG.9

# FIG.10

BR

BR

R-3

Im

FIG.11

START

↓

INPUT IMAGE CAPTURED BY CAMERA — S1

↓

CORRECT IMAGE — S2

↓

SET REGION — S3

↓

EXECUTE PERSON DETECTION — S4

↓

HAS PERSON DETECTION FOR ALL REGIONS ENDED ? — S5

NO → (back to SET REGION)

YES ↓

HAS PERSON BEEN DETECTED ? — S6

NO → NOT DISPLAY ALARM — S8

YES ↓

DISPLAY ALARM — S7

↓

END

# FIG.12

# FIG.13

# FIG.14

# FIG.15

# EP 3 806 032 A1

| | INTERNATIONAL SEARCH REPORT | International application No. |
|---|---|---|
| | | PCT/JP2019/026924 |

**A. CLASSIFICATION OF SUBJECT MATTER**
Int.Cl. G06T7/00(2017.01)i

According to International Patent Classification (IPC) or to both national classification and IPC

**B. FIELDS SEARCHED**

Minimum documentation searched (classification system followed by classification symbols)
Int.Cl. G06T7/00

Documentation searched other than minimum documentation to the extent that such documents are included in the fields searched
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 9-326096 A (NISSAN MOTOR CO., LTD.) 16 December 1997, claims 1-2 (Family: none) | 1-2, 5, 7-8, 10-11 |
| A | | 3-4, 6-9 |

☒ Further documents are listed in the continuation of Box C.  ☐ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 September 2019 (03.09.2019) | 10 September 2019 (10.09.2019) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

29

**INTERNATIONAL SEARCH REPORT**

International application No.

PCT/JP2019/026924

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2011-223410 A (SUMITOMO HEAVY INDUSTRIES, LTD.) 04 November 2011, paragraphs [0014], [0020], [0024]-[0025], [0034]-[0035] & US 2013/0033495 A1, paragraphs [0041], [0047], [0051]-[0052], [0061]-[0062] & EP 2560385 A1 & EP 3410703 A1 & CN 102792686 A & KR 10-2013-0018869 A | 1-2, 5, 7-8, 10-11 |
| A | | 3-4, 6, 9 |
| Y | JP 2005-222307 A (SUMITOMO ELECTRIC INDUSTRIES, LTD.) 18 August 2005, paragraph [0059] (Family: none) | 5 |
| Y | JP 2012-212426 A (CANON INC.) 01 November 2012, paragraph [0065] & US 2012/0237089 A1, paragraph [0086] | 7 |
| Y | JP 2014-146238 A (PANASONIC CORP.) 14 August 2014, paragraphs [0017], [0054] & US 2014/0211994 A1, paragraphs [0024], [0065] | 8 |
| A | | 9 |

Form PCT/ISA/210 (continuation of second sheet) (January 2015)

**EP 3 806 032 A1**

**REFERENCES CITED IN THE DESCRIPTION**

**Patent documents cited in the description**

- JP 2017156988 A